# EUROPÄISCHE PATENTANMELDUNG

(11) **EP 1 118 810 A1**
(43) Veröffentlichungstag der Anmeldung: **25.07.2001**
(21) Anmeldenummer: 00101130.3
(22) Anmeldetag: 21.01.2000
(51) Int. Cl.: F16L 25/00

(54) **Baugruppe zum dichten Verbinden eines Endabschnittes eines Wellrohres oder eines Wellschlauchs mit einem Gegenstück und Wellrohr, bzw. Wellschlauch mit einer solchen Baugruppe**

(71) Anmelder: Boa AG, CH-6023 Rothenburg (CH)
(72) Erfinder: Dürger, Stefan, 6020 Emmenbrücke (CH); Kaufmann, Alex, 6203 Sempach-Station (CH)
(74) Vertreter: Blum, Rudolf Emil Ernst

(57) **Zusammenfassung**

Eine Überwurfmutter (4) ist beim Ende eines parallel gewellten Wellrohres, bzw. Wellschlauches angeordnet. Sie stützt sich gegen einen Haltering (5) ab, der einen Innenumfangsvorsprung (6) aufweist. Dieser Innenumfangsvorsprung (6) ragt in das letzte Wellental (7) des Wellrohres, bzw. Wellschlauches, so dass der Haltering (5) auf dem Wellrohr verankert ist. Vom Haltering (5) steht axial ein Vorsprungsabschnitt (8) ab, der auf dem letzten Wellenberg (3) aufliegt. Dieser Vorsprungsabschnitt (8) ist von einem Dichtungsring (9) gefolgt, der stumpf am Ende des Wellrohres, bzw. Wellschlauches anliegt. Der Haltering (5) und der Dichtungsring (9) sind innerhalb der Überwurfmutter (4) angeordnet und können sich somit nicht von selbst aufweiten.

## Beschreibung

Die vorliegende Erfindung betrifft eine Baugruppe zum dichten Verbinden eines Endabschnittes eines Wellrohres oder Wellschlauchs mit einem Gegenstück. Sie betrifft weiter ein Wellrohr, bzw. einen Wellschlauch mit einer solchen Baugruppe.

Wellrohre und Wellschläuche sind nicht starre, sondern relativ nachgiebige Gebilde. Aus diesem Grund sind besondere technische Lösungen zur Verbindung von Wellrohren und Wellschläuchen mit starren Gegenstücken notwendig.

Insbesondere zur Bildung einer dichten Verbindung zwischen den Endabschnitten von Wellrohren, bzw. Wellschläuchen ist eine grosse Anzahl von Vorrichtungen und Bauteilen bekannt geworden.

Beispielsweise sind Halbschalen bekannt, die auf die jeweiligen Endabschnitte aufgebracht und in irgendwelcher Weise mit diesen verbunden werden, welche Halbschalen als Zwischenstücke zur Verbindung mit dem starren Gegenstück dienen. Weiter bekannt sind als Zwischenstücke dienende langgestreckte ringförmige Gebilde mit Vorkehrungen zur Verbindung mit einem jeweiligen Gegenstück. Weiter bekannt sind auch Ausbildungen, bei welchen Wellen des Wellrohres, bzw. Wellschlauches gestaucht werden müssen, und weiter sind auch Ausbildungen bekannt, bei welchen ein Schweissen oder Löten notwendig ist. Demgemäss sind die bekannten Vorrichtungen und Bauteile verhältnismässig kostenaufwendig. Zudem verursachen sie einen verhältnismässig hohen Montageaufwand, also hohe Montagekosten.

Hier will die Erfindung Abhilfe schaffen. Die Erfindung, wie sie in den Ansprüchen gekennzeichnet ist, löst die Aufgabe, eine Baugruppe zum dichten Verbinden eines Endabschnittes eines Wellrohres, bzw. Wellschlauches mit einem Gegenstück sowie ein Wellrohr, bzw. einen Wellschlauch mit einer solchen Baugruppe zu schaffen, bei welchem sich das dichte Verbinden mittels einfachen Bauteilen und einem minimalen Montageaufwand erreichen lässt.

Die durch die Erfindung erreichten Vorteile sind im wesentlichen darin zu sehen, dass die Baugruppe aus einer handelsüblichen Überwurfmutter und einem handelsüblichen Dichtungsring besteht, und einem äusserst einfach geformten Haltering, der in ein Wellental eingesetzt wird und die Kräfte von der Überwurfmutter auf das Wellrohr, bzw. den Wellschlauch überträgt. Zum Aufbringen des Halteringes auf den Endabschnitt des Wellrohres oder Wellschlauches ist dieser aufweitbar ausgebildet, und weil er innerhalb der Überwurfmutter angeordnet ist, wird er durch die Überwurfmutter auf dem Wellrohr, bzw. Wellschlauch gegen ein Aufweiten gesichert.

Im folgenden wird die Erfindung anhand von mehreren Ausführungswegen darstellenden Zeichnungen näher erläutert. Es zeigt
Fig. 1 einen Endabschnitt eines Wellrohres, bzw. Wellschlauches mit einer Überwurfmutter, einem Haltering und einem Dichtungsring zur Verbindung mit einem Gegenstück,
Fig. 2 in einem vergrösserten Massstab eine Schnittansicht des in der Fig. 1 gezeigten Halteringes,
Fig. 3 eine Seitenansicht des Halteringes der Fig. 2,
Fig. 4 eine zweite Ausführung der Erfindung,
Fig. 5 eine dritte Ausführung der Erfindung,
Fig. 6 eine Schnittansicht des in der Fig. 5 gezeigten Halteringes, und
Fig. 7 eine Seitenansicht des Halteringes der Fig. 6.

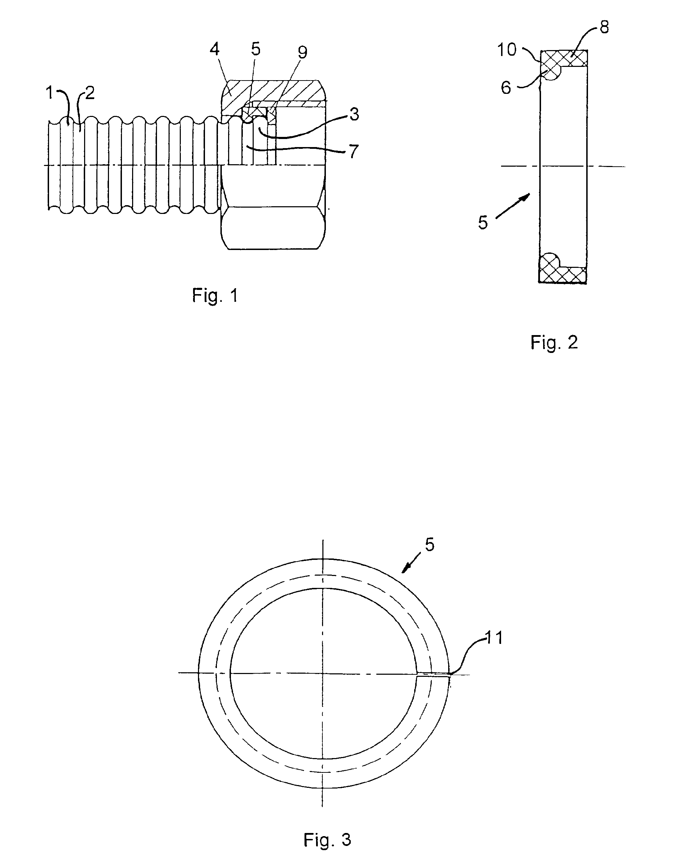

Fig. 1 zeigt den Endabschnitt eines parallel gewellten Wellrohres, bzw. Wellschlauches mit Wellenbergen 1 und Wellentälern 2. Das Wellrohr, bzw. der Wellschlauch ist beim Ende derart geschnitten, dass es, bzw. er unmittelbar nach einem letzten Wellenberg 3 endet. Auf dem Endabschnitt des Wellrohres sitzt eine Überwurfmutter 4, mittels welcher das Wellrohr, bzw. der Wellschlauch mit einem (nicht gezeichneten) Gegenstück zu verschrauben ist. Die Überwurfmutter 4 steht über einem Haltering 5 mit dem Wellrohr, bzw. Wellschlauch in Verbindung.

Dieser Haltering 5, siehe Fig. 2, weist einen Innenumfangsvorsprung 6 auf, der in das letzte Wellental 7 beim Endabschnitt hineinragt, d.h. in dasselbe eingesetzt ist. Aus der Fig. 1 ist ersichtlich, dass die Kontur des Innenumfangsvorsprunges 6 der Kontur der Wellentäler 2 des Wellrohres, bzw. Wellschlauches und offensichtlich insbesondere der Kontur des letzten Wellentales 7 entspricht.

Weiter weist der Haltering 5 einen koaxial zum Innenumfangsvorsprung 6 verlaufenden, ringförmigen Vorsprungsabschnitt 8 auf. Dieser Vorsprungsabschnitt 8 liegt auf dem letzten Wellenberg 3 auf. Der Vorsprungsabschnitt 8 ist von einem als Flachdichtung ausgebildeten Dichtungsring 9 gefolgt.

Bei der vom Vorsprungsabschnitt 8 axial entgegengesetzten Seite weist der Haltering 5 eine ringförmige, koaxial zum Innenumfangsvorsprung 6 verlaufende, ringförmige Auflagefläche 10 auf und aus der Fig. 1 ist es ersichtlich, dass die Überwurfmutter 4 auf dieser Auflagefläche 10 aufliegt.

Der Haltering 5 ist in einem begrenzten Mass elastisch aufweitbar und weist zu diesem Zweck einen Schlitz 11 auf, der in der Fig. 3 dargestellt ist.

Das Wellrohr, bzw. Wellschlauch und die Überwurfmutter 4 können aus irgendwelchen für den jeweiligen Anwendungszweck zweckdienlichen Werkstoff hergestellt sein, also z.B. aus einem Metall, bzw. einer Metallegierung, oder auch aus einem Kunststoff. Der Haltering 5 kann aus einem Metall oder auch aus einem Kunststoff sein, jedoch dennoch ein wenig elastisch, so dass er, wie noch beschrieben sein wird, begrenzt aufweitbar ist. Der Dichtungsring kann z.B. aus einem Silikon bestehen.

Zum Zusammenbauen wird vorerst die Überwurfmutter 4, deren kleinster Durchmesser etwas grösser als der Durchmesser des Wellrohres, bzw. Wellschlauches bei den Wellenbergen ist, auf das Wellrohr aufgeschoben. Danach wird der Haltering 5 ein wenig elastisch aufgeweitet, so dass sein Innendurchmesser etwas grösser ist als der Aussendurchmesser des Wellrohres, bzw. Wellschlauches bei den Wellenbergen 1, insbesondere dem letzten Wellenberg 3, und danach auf den Endabschnitt aufgeschoben, bis der Innenumfangsvorsprung 6 in das letzte Wellental 7 einschnappt. Er muss also nur soweit aufgeweitet werden können, dass er über die Wellenberge geschoben werden kann. Daher kann er auch aus einem verhältnismässig starren, nur begrenzt elastischen Werkstoff hergestellt sein. Damit ist der Haltering 5 auf dem Endabschnitt des Wellrohres, bzw. Wellschlauches arretiert und verankert. Es ist jedoch nicht notwendig, dass der Haltering 5 auf dem Endabschnitt geklemmt gehalten ist. Er kann vorteilhaft ohne weiteres derart bemessen sein, dass er im entspannten Zustand auf den Endabschnitt frei gedreht werden kann. Danach wird der Dichtungsring 9 eingesetzt, so dass er stumpf am Ende des Endabschnittes anliegt und dem Vorsprungsabschnitt unmittelbar gegenüberliegt.

Nun kann die Überwurfmutter 4 auf ein entsprechendes Aussengewinde eines Gegenstückes aufgeschraubt und festgezogen werden. Beim Festziehen der Verschraubung presst die Überwurfmutter 4 gegen die Auflagefläche 10 des Halteringes 5 und wird auf Grund des in das letzte Wellental 7 hineinragende Innenumfangsvorsprung 6 des Halteringes 5 festgehalten. Das Ende des Gegenstükkes, d.h. dessen Aussengewindeteil wird durch das Anziehen der Überwurfmutter 4 gegen den Dichtungsring 9 gepresst, womit eine einwandfreie Abdichtung zwischen den miteinander verbundenen Teilen erzielt ist. Der Aussendurchmesser des Halteringes 5 ist nur soweit kleiner als der Innendurchmesser der Überwurfmutter bei den Zähnen des Gewindes, so dass sich die Überwurfmutter 4 auf dem Haltering 5 drehen lässt, jedoch ein Aufweiten des Halteringes 5 auf Grund der axialen Krafteinwirkung, um aus dem Wellental 7 zu springen, nicht möglich ist.

Allgemein weist das entgegengesetzte Ende des Wellrohres, bzw. Wellschlauches dieselbe Ausbildung auf.

Das Festziehen der Überwurfmutter 4 kann manuell vom geübten Monteur nach Gefühl erfolgen, oder auch mittels einem Drehmomentschlüssel.

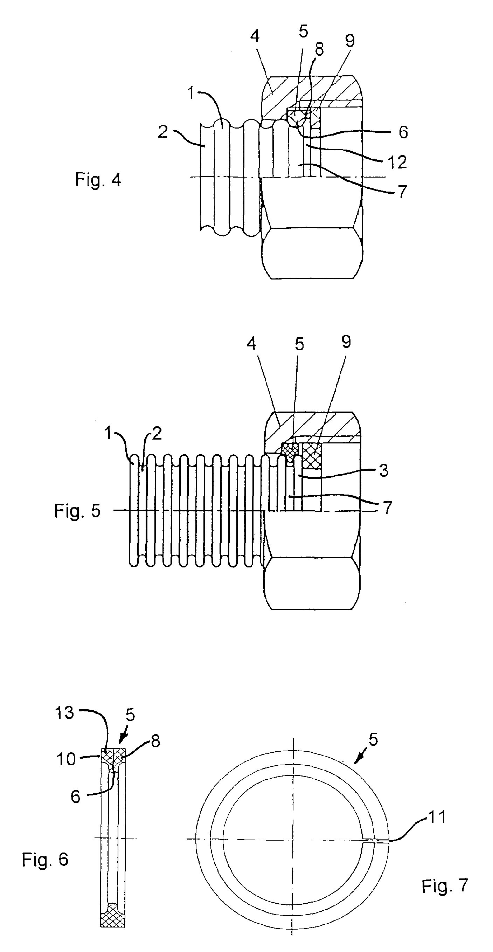

Die Ausführung nach der Fig. 4 unterscheidet sich von derjenigen nach Fig. 1, indem der Endabschnitt beim Scheitelbereich des bei der Abtrennung während dem Abhängen des Wellrohres, bzw. Wellschlauches durchschnittenen Wellenberges 3 endet.

Zur Beschreibung dieser Ausführung werden für korrespondierende Bauteile dieselben Bezugszeichen wie für die Beschreibung der ersten Ausführung verwendet.

Das parallel gewellte Wellrohr, bzw. der parallel gewellte Wellschlauch weist Wellenberge 1 und Wellentäler 2 auf. Wie oben erläutert, ist beim Endabschnitt lediglich ein halber Wellenberg 12 vorhanden. Auf dem Endabschnitt ist wieder eine Überwurfmutter 4 angeordnet.

Der Haltering 5 weist einen Innenumfangsvorsprung 6 auf, der in das letzte Wellental 7 hineinragt. Der Vorsprungsabschnitt 8 dieser Ausführung des Halteringes 5 ist axial kürzer als bei der Ausführung nach Fig. 1, da er lediglich nur noch den halben Wellenberg 12 überbrücken muss. Beim Ende des Endabschnittes ist ein Dichtungsring 9 vorhanden, der sowohl stumpf am Ende des halben Wellenbergs 12 als auch am verkürzten Vorsprungsabschnitt 8 anliegt.

Das Zusammenbauen dieser Ausführung erfolgt wie dies der Fall bei der Ausführung nach der Fig. 1 ist. Beim Vergleich der Fig. 1 mit der Fig. 4 wird ersichtlich, dass diese zweite Ausführung der Erfindung axial kürzer als die erste Ausführung derselben ist.

Eine dritte Ausführung ist in den Fig. 5, 6 und 7 dargestellt. Zur Beschreibung dieser dritten Ausführung werden wiederum für die Bauteile, welche mit denjenigen der zwei vorgängigen Ausführungen korrespondieren, dieselben Bezugszeichen verwendet.

Das parallel gewellte Wellrohr, bzw. der parallel gewellte Wellschlauch auch dieser Ausführung weist Wellenberge 1 und Wellentäler 2 auf. Beim Endabschnitt des Wellrohres, bzw. Wellschlauches ist ein letzter, vollständiger Wellenberg 3 vorhanden. Auf diesem Endabschnitt ist die Überwurfmutter 4 angeordnet.

Der Haltering 5 weist einen Innenumfangsvorsprung 6 auf, der in das letzte Wellental 7 hineinragt, ohne jedoch den Wellentalboden zu berühren. Der Vorsprungsabschnitt 8 ist axial kürzer als die Wellenberge 1 und auch als der letzte Wellenberg 3 des Endabschnittes. Bei der dem Vorsprungsabschnitt 8 axial entgegengesetzten Seite weist der Haltering 5 einen weiteren ringförmigen Vorsprungsabschnitt 13 auf. Die Endfläche dieses weiteren Vorsprungsabschnittes dient als Auflagefläche 10 für die Überwurfmutter 4. Auch dieser Haltering 5 weist einen Schlitz 11 auf, so dass er ebenfalls aufweitbar ist.

Aus der Fig. 6 ist ersichtlich, dass dieser Haltering im Gegensatz zu den ersten zwei Ausführungen eine symmetrische Querschnittsform aufweist. Das heisst unter anderem, dass sich der weitere Vorsprungsabschnitt 13 ebenfalls nur bis zum Scheitel desjenigen Wellenberges erstreckt, auf welchem er aufliegt. Schliesslich ist zu bemerken, dass der in der Fig. 5 ersichtliche Dichtungsring 9, der ebenfalls stumpf am Ende des Endabschnittes des Wellrohres, bzw. Wellschlauches anliegt, einen Abstand vom Vorsprungsabschnitt 8 aufweist. Er muss schliesslich nicht zwischen dem Gegenstück und dem Haltering 5 dichten, sondern zwischen dem Gegenstück und dem Endabschnitt.

Das Montieren dieser dritten Ausführung erfolgt wie dasjenige der vorgängig beschriebenen Ausführungen, so dass sich eine nochmalige Beschreibung erübrigt.

## Patentansprüche

1. Baugruppe zum dichten Verbinden eines Endabschnittes eines Wellrohres oder Wellschlauches mit einem Gegenstück, gekennzeichnet durch eine Überwurfmutter (4), einen Haltering (5) für die Überwurfmutter (4) mit einem zur Verankerung desselben auf dem Endabschnitt bestimmten Innenumfangsvorsprung (6), und mit einem bei einer Stirnseite des Halteringes (5) koaxial zum Innenumfangsvorsprung (6) verlaufenden ringförmigen Vorsprungsabschnitt (8), und durch einen neben dem Vorsprungsabschnitt (8) angeordneten Dichtungsring (9), der zum Dichten zwischen dem jeweiligen Endabschnitt und dem Gegenstück bestimmt ist.

2. Baugruppe nach Anspruch 1, dadurch gekennzeichnet, dass der Haltering (15) eine zum Zusammenwirken mit der Überwurfmutter (4) bestimmte, koaxial zum Innenumfangsvorsprung (6) verlaufende ringförmige Auflagefläche (10) aufweist, die bei der dem Vorsprungsabschnitt (8) axial entgegengesetzten Seite des Halteringes (5) angeordnet ist.

3. Baugruppe nach Anspruch 1 oder 2, dadurch gekennzeichnet, dass die ringförmige, zum Zusammenwirken mit der Überwurfmutter (4) bestimmte Auflagefläche (10) auf einem weiteren, dem genannten Vorsprungsabschnitt (8) axial entgegengesetzten Seite des Halteringes (5) angeordneten und koaxial zum Innenumfangsvorsprung (6) verlaufenden, ringförmigen Vorsprungsabschnitt (13) angeordnet ist.

4. Baugruppe nach einem der vorangehenden Ansprüche, dadurch gekennzeichnet, dass der Dichtungsring (9) als Flachdichtung ausgebildet ist.

5. Baugruppe nach einem der vorangehenden Ansprüche, dadurch gekennzeichnet, dass das Wellrohr, bzw. der Wellschlauch parallel gewellt ausgebildet ist.

6. Wellrohr, bzw. Wellschlauch mit einer Baugruppe zum dichten Verbinden desselben mit einem Gegenstück nach einem der vorangehenden Ansprüche, dadurch gekennzeichnet, dass der Haltering (5) zum Aufbringen auf den Endabschnitt ausweitbar ausgebildet ist und sein Innenumfangsvorsprung (6) in das letzte Wellental (2) vor dem Ende eines jeweiligen Endabschnittes hineinragt, dass der neben dem Dichtungsring (9) angeordnete Vorsprungsabschnitt (8) des Halteringes (5) auf dem letzten Wellenbergteil (3; 12) bei einem jeweiligen Endabschnitt aufliegt, dass der Dichtungsring (9) stumpf am jeweiligen Endabschnitt anliegt, und dass der Haltering (5) und der Dichtungsring (9) innerhalb der Überwurfmutter (4) angeordnet sind.

7. Wellrohr, bzw. Wellschlauch nach Anspruch 6, dadurch gekennzeichnet, dass das Wellrohr, bzw. der Wellschlauch parallel ausgebildet ist und jeweils unmittelbar nach einem vollständigen Wellenberg (3) endet, und dass die axiale Ausdehnung des ringförmigen Vorsprungsabschnittes (8) gleich der axialen Ausdehnung des Wellenberges (3) ist.

8. Wellrohr, bzw. Wellschlauch nach Anspruch 6, dadurch gekennzeichnet, dass das Wellrohr, bzw. des Wellschlauches parallel gewellt ausgebildet ist und jeweils beim Scheitelbereich eines Wellenberges endet, so dass der Endabschnitt beim jeweiligen Ende einen halben Wellenberg (12) aufweist, und dass die axiale Ausdehnung des ringförmigen Vorsprungsabschnittes (8) gleich der axialen Ausdehnung des halben Wellenberges (12) ist.

9. Wellrohr, bzw. Wellschlauch nach Anspruch 6, dadurch gekennzeichnet, dass das Wellrohr, bzw. der Wellschlauch parallel gewellt ausgebildet ist und jeweils unmittelbar nach einem vollständigen Wellenberg (3) endet, der Haltering (5) einen weiteren, dem genannten Vorsprungsabschnitt (8) entgegengesetzt angeordneten weiteren Vorsprungsabschnitt (13) mit der Auflagefläche (10) für die Überwurfmutter (4) aufweist, und dass die axiale Ausdehnung des Vorsprungsabschnittes (8) und des weiteren Vorsprungsabschnittes (13) jeweils mindestens annähernd die Hälfte der axialen Ausdehnung des jeweiligen Wellenberges (3) beträgt.

10. Wellrohr, bzw. Wellschlauch nach Anspruch 9, dadurch gekennzeichnet, dass der erstgenannte Vorsprungsabschnitt (8) in einem Abstand vom Dichtungsring (9) angeordnet ist.
